(19) Europäisches Patentamt
European Patent Office
Office européen des brevets

(11) Publication number: **0 408 386 A1**

# EUROPEAN PATENT APPLICATION

(21) Application number: 90307690.9

(22) Date of filing: 13.07.90

(51) Int. Cl.5: **C09J 107/02, C09J 109/08,**
**C09J 133/06, C09J 131/04,**
**C09J 5/00**

(30) Priority: 14.07.89 GB 8916186

(43) Date of publication of application:
16.01.91 Bulletin 91/03

(84) Designated Contracting States:
AT BE CH DE DK ES FR GB GR IT LI LU NL SE

(71) Applicant: Albright & Wilson Limitedted
210-222 Hagley Road West
Oldbury Warley West Midlands B68 0NN(GB)

(72) Inventor: Dudley, Michael Ian
19 Hencliffe Way
Hanham, Bristol BS15 3TH(GB)
Inventor: Lake, Terence Paul
50 Wades Road
Filton, Bristol BS12 7ED(GB)

(74) Representative: Ackroyd, Robert et al
Pollak, Mercer & Tench Eastcheap House
Central Approachach
Letchworth Hertfordshire SG6 3DS(GB)

(54) Flooring adhesive.

(57) A two-part adhesive comprises first and second components, the first, adhesive component comprising an aqueous dispersion containing 5.0 to 35% by weight of a polymer and 1.5 to 55 % by weight of a resin capable of interacting with the polymer to form a set adhesive upon evaporation of water from the composition, the second component comprising a destabiliser for application to the first component subsequently to application thereof to at least one of the surfaces to be bonded. The resin is preferably rosin or a rosin derivative. The destabiliser may be an aluminium chlorohydrate, or another aluminium compound, in aqueous solution. The two components are conveniently provided as respective parts of a two-part package.

# FLOORING ADHESIVE

This invention relates to adhesives which are usable for securing floorcoverings to floors.

In general, a flooring adhesive must have good adhesion to a variety of floorcoverings and flooring materials and also have good wet tack and grab properties, together with "legging" characteristics which allow the carpet, after laying, to be firmly adhered to the floor. It is also desirable that there is no tendency for the laid carpet to curl back at its edges and require re-rolling after laying. This tendency is particularly inconvenient when curling takes place at a time after laying which requires a return visit to the site by the laying personnel.

In the past, floorcoverings, for example carpets in non-domestic situations, have been secured to the floor by use of solvent-based adhesives. Such adhesives are often based on styrene butadiene rubber (SBR) and are tackified by the incorporation of an emulsified resin which can be predissolved in the solvent (e.g. toluene or methylated spirit) or can itself be a liquid (e.g. coumarone-indene and other aliphatic or aromatic hydrocarbon resins).

These know adhesives have disadvantages, for example because highly energy-intensive machinery is required to emulsify the resin into the adhesive and because the resulting adhesive often poses a safety problem in both use and manufacture, as a result of solvent flammability or the preheating of high viscosity liquid resins.

US Patents 4386992 and 4479840 describe the use of an adhesive which comprises an aqueous synthetic resin emulsion which is applied simultaneously with a gelling agent to the surfaces to be bonded.

.The present invention provides an adhesive composition usable for securing floorcoverings to floors, the composition comprising an aqueous dispersion containing 5.0 to 35% by weight of a polymer and 1.5 to 55 % by weight of a resin capable of interacting with the polymer to form a set adhesive upon evaporation of water from the composition.

The composition preferably contains 10 to 20% by weight of the polymer, more preferably 14 to 16% by weight.

The amount of resin contained in the composition is preferably 18 to 30% by weight, more preferably 22 to 26% by weight.

The polymer is preferably a styrene butadiene copolymer, an acrylic polymer or copolymer, a vinyl acetate ethylene copolymer or natural rubber, or a mixture of or containing one or more of these. Styrene butadiene copolymers are most preferred.

The resin is preferably a rosin or rosin ester, more preferably gum rosin or tall oil rosin, or an ester of these. Disproportionated rosin may also be used in the compositions of the invention. Esterified rosins are rosins which have been reacted with an alcohol which is preferably a polyol such as glycerol. Disproportionated rosins are rosins which have been treated by a catalytic process in order to improve their stability to oxidation. Mixtures of any of these types of rosin may be used in the compositions of this invention.

If the resin contains process oil, preferably in an amount of 2 to 50% by weight, more preferably 10 to 20% by weight, most preferably about 14 to 16 % by weight of the resin and oil combined, this will aid the wet grab properties of the adhesive. The resin may be pre-treated with formaldehyde in order to enhance its stability.

The adhesive composition preferably contains a filler in an amount of up to 60% by weight, more preferably 30 to 40% by weight, most preferably 34 to 36% by weight of the composition. Suitable fillers are calcium carbonate, silica, dolomite, quartz, clay and mixtures thereof.

By addition of a viscosity or rheology modifier such as a polyacrylate, an acrylic copolymer, a polyurethane, polyvinyl pyrrolidone or cellulose, in an amount of up to 15%, preferably 1.0 to 5.0%, most preferably 1.8 to 2.0% by weight of the composition, the viscosity of the composition can be adjusted to particular uses of the adhesive.

To preserve the material during storage, a biocide such as· a bacteriocide, slimicide, and/or fungicide can also be included, in an amount of up to 3% by weight, for example·0.1% by weight, of the composition.

The composition may also contain an antifoam agent, for example in an amount of up to 5% by weight of the composition, preferably about 0.1% by weight.

Adhesive compositions according to the invention can be prepared by forming an aqueous dispersion of the resin, if necessary in the presence of a surfactant and/or after heating of the resin, the dispersion preferably having a solids content of 30 to 80% by weight of the dispersion, more preferably 50 to 70% by weight and most preferably about 60% by weight. The polymer may be used in the form of a latex, preferably having a solids content of 50 to 70% by weight of the latex, more preferably 65 to 70% by weight. Some or all of the polymer latex may be dispersed in the resin (and any surfactant) before any

2

water is added, any remaining latex being added later, either during or after addition of the water. Any filler present is preferably pre-dispersed in the remaining latex (which can be different from the initial latex) and added therewith to the dispersion of resin and initial latex. Preferably however an aqueous dispersion of the resin is formed and then combined with the latex, into which any filler present in the composition has already been dispersed.

Adhesives according to the invention can give good adhesion between a variety of floorcoverings and flooring materials, whilst having acceptable wet grab and tack properties.

In order to minimise any tendency for the adhesive to absorb too quickly into the floorcovering and leave an amount insufficient to adhere the floorcovering to the floor (particularly adjacent the edges where greater adhesion is required), the adhesive is advantageously used in combination with a destabiliser also provided by the invention.

The destabiliser may be an alkaline destabiliser, such as sodium carbonate, but is preferably an acidic destabiliser such as calcium chloride, aluminium orthophosphate $AlPO_4$, aluminium sulphate $Al_2(SO_4)_3$, paper maker's alum $Al_2(SO_4)_3.18H_2O$, polyaluminium silicate sulphate, a polyaluminium chloride, such as one having the formula $Al(OH)_x(SO_4)_yCl_z$, where x is in the range 1.35 to 1.65, y is in the range 0.08 to 0.15 and z is $3(x+y)$ or one having the formula $Al_n(OH)_mCl_{3mn}$, where n is in the range 1 to 20, m is less than 3n and $(3n-m)/m$ is at least 2 and preferably at least 5.

A particular type of polyaluminium chloride which is useful in this invention is that described in European Patent Application 0145686 and that produced by the process described in European Patent Application 0181847.

Another useful type of polyaluminium chloride is an aluminium chlorohydrates having the formula $Al_x(OH)_yCl_z$ where x is from 1 to 4, preferably 1, y and z, which may be the same or different, are from 0.5 to 2.5 and the ratio y:z is in the range 5:1 to 1:5. Such destabilisers are preferred.

The destabiliser used in the present invention is preferably applied at a surface rate of 0.5 to 100g $m^{-2}$, preferably 10 to 30g $m^{-2}$ and most preferably about 20g $m^{-2}$, for example by spraying in water to the adhesive after the adhesive has been applied to the floorcovering or the floor.

Application to the destabiliser has been found to enhance considerably the grab, tack and legging properties of the adhesive and to avoid the tendency for the floorcovering to curl and require re-rolling after initial laying. The destabiliser is normally applied only adjacent the edges of the floorcovering but may be used over larger other areas when the properties it promotes are required elsewhere.

For convenient use of the adhesive according to the invention, the invention also provides a two-part pack comprising a first part containing the adhesive of the invention and a second part containing the destabiliser of the invention.

The invention also provides a method of laying a floorcovering in which adhesive according to the invention is applied to a floor and/or to the floor-covering, at least some, preferably an edge region, of the adhesive is treated with destabiliser according to the invention, and the floorcovering is laid.

Adhesives according to the invention can be used for securing a wide range of floorcoverings, including PVC tiles, needlefelt carpets and polyurethane foam and hessian backed carpets.

The invention will now be described further by way of the following examples.

EXAMPLE 1

An adhesive was produced by placing 240g of SBR latex (68% solids) in a mixing bowl, together with 136g of calcium carbonate and 227g of silica. These were blended at low speed using a food mixer. When smooth, 417g of a tall oil rosin dispersion (Territack 707, available from Albright & Wilson Limited) having 60% by weight solids content and containing a suitable surfactant was added and allowed to form a homogeneous mix. Approximately 1g of an antifoam agent and approximately 1g of biocide were then added, followed by 20g of an acrylic copolymer thickener, as rheology modifier.

EXAMPLE 2

The procedure of example 1 was followed except that the rosin dispersion was formed from tall oil rosin (Unitol R60, available from Union Camp) and water after first melting the rosin by heating to about 80°C.

EXAMPLE 3

60g of SBR latex of 50% solids content was added to 250g of Unitol R60 already melted by heating to about 80° C. 156g of water was then added, following by 266g of the SBR latex, to which 136g of calcium carbonate and 227g of silica had been added. Antifoam agent, biocide and thickener were then added, as in example 1.

EXAMPLE 4

An adhesive was produced using the ingredients and procedure of example 1, except that 204g of calcium carbonate and 341g of silica were used.

Initial wet grab tests were carried out on the adhesives of examples 1, 3 and 4 as follows:

The adhesive was combed onto the reverse side of hardboard using a standard flooring adhesive trowel and allowed to dry for 10 minutes. Pieces of needlefelt carpet were then laid onto the wet adhesive and rolled with a 2kg roller. The carpet pieces were then pulled off individually at 10 minute intervals and grab/tack and legging characteristics assessed. The results are shown in table 1, in which adhesives 1, 2 and 3 are the products of examples 1, 3 and 4 respectively and adhesives 4 and 5 are the products of example 1, onto which aluminium chlorohydrate (in the form of a solution of 15.9% by weight alumina content, available from Laporte Inorganics) and a 16% w/v solution of sodium carbonate, respectively, were sprayed at an application rate of 20g m-2 onto the adhesive just prior to laying of the carpet pieces. Shear adhesion tests according to BS 5350; part Fl; 1983 except plywood was substituted for asbestos plaques, were also carried out on samples 1, 2 and 3. The results are given in table 2. In each test, the reference adhesive was a conventional solvent-based flooring adhesive available from F Ball & Co under the name "Styccobond F3".

TABLE 1

| adhesive | initial | 10 | 20 | 30 | 40 | 50 | 60(mins) |
|---|---|---|---|---|---|---|---|
| REFERENCE | VSC | SL | SL | S/ML | GL,MB | EL,G/EB | EL,EB |
| 1 | VSC | SL | ML,SB | M/GL,SB | G/EL,MB | EL,G/EB | EL,EB |
| 2 | SC | | | SL | SL | SL | ML,GB |
| 3 | SC | | | SL,SB | SL,SB | SL,MB | SL,GB |
| 4 | VSC | M/GL | M/GL,SB | GL,MB | GL,MB | GL,GB | EL,GB |
| 5 | VSC | ML,SB | GL,SB | EL,S/MB | EL,MB | EL,G.EB | EL,EB |

| KEY |
|---|
| V - very |
| S - slight |
| M - moderate |
| G - good |
| E - excellent |
| C - curl |
| L - legging |
| B - bond |

TABLE 2

| PLYWOOD/PVC SHEAR ADHESION TEST (N/50x50mm) | | | | |
|---|---|---|---|---|
| adhesive | 7 days at rt | 28 days at rt | 7 days at rt | 28 days at rt |
| | | | 21 days at 50oC | Pulled at 50° C |
| REFERENCE | 348 | 449 | 423 | 140 |
| 1 | 487 | 593 | 413 | 120 |
| 2 | 445 | 512 | 417 | 150 |
| 3 | 423 | 519 | 400 | 103 |

It can be seen from table 1 that adhesive samples 4 and 5 had final legging and bonding properties which were virtually as good as the reference adhesive but which avoided the disadvantages of solvent-based adhesives. It can also be seen that samples 4 to 5 had better legging characteristics than the reference sample at times immediately after laying. From table 2 it can be seen that adhesive samples 1, 2 and 30 provide superior sheer adhesion after 7 or 28 days at room temperature when compared with the reference adhesive. The heat-treated samples performed slightly worse than the reference in some cases but still showed acceptable adhesion. Adhesion tests on samples 4 and 5 would be expected to give similar results.

**Claims**

1. A two-part adhesive comprising first and second components, the first, adhesive component comprising an aqueous dispersion containing 5.0 to 35% by weight of a polymer and 1.5 to 55 % by weight of a resin capable of interacting with the polymer to form a set adhesive upon evaporation of water from the composition, the second component comprising a destabiliser for application to the first component subsequently to application thereof to at least one of the surfaces to be bonded.

2. An adhesive according to claim 1, in which the first component contains 10 to 20%, preferably 14 to 16%, by weight of polymer.

3. An adhesive according to claim 1 or 2, in which the first component contains 18 to 30%, preferably 22 to 26%, by weight of resin.

4. An adhesive according to any preceding claim, in which the polymer is a styrene butadiene copolymer, an acrylic polymer or copolymer, a vinyl acetate ethylene copolymer or natural rubber, or a mixture of or containing one or more of these.

5. An adhesive according to claim 4, in which the polymer is a styrene butadiene copolymer.

6. An adhesive according to any preceding claim, in which the resin is a rosin or rosin ester.

7. An adhesive according to claim 6, in which the resin is gum rosin or tall oil rosin, or an ester of these.

8. An adhesive according to claim 6, in which the resin is a disproportionated rosin.

9. An adhesive according to any preceding claim, in which the resin contains process oil.

10. An adhesive according to claim 9, in which the amount of process oil is from 2 to 50%, preferably from 10 to 20% and more preferably 14 to 16%, by weight of the resin and oil combined.

11. An adhesive according to any preceding claim, in which the first component contains a filler in an amount of up to 60%, preferably from 30 to 40% and more preferably 34 to 36%, by weight of the first component.

12. An adhesive according to claim 11, in which the filler comprises one or more of calcium carbonate, silica, dolomite, quartz and clay.

13. An adhesive according to any preceding claim, in which the first component contains a viscosity modifier in an amount of up to 15%, preferably 1.0 to 5.0% and more preferably 1.8 to 2.0%, by weight of the first component.

14. An adhesive according to any preceding claim, in which the first component contains a biocide in an amount of up to 3% by weight of the first component.

15. An adhesive according to any preceding claim, in which the second component comprises calcium chloride, sodium carbonate, aluminium orthophosphate, aluminium sulphate, paper maker's alum, polyaluminium silicate sulphate, a polyaluminium chloride, or a mixture of one or more thereof.

16. An adhesive according to claim 15, in which the second component comprises a polyaluminium chloride having the formula $Al(OH)_x(SO_4)_yCl_z$, where x is in the range 1.35 to 1.65, y is in the range 0.08 to 0.15 and z is $3(x+y)$.

17. An adhesive according to claim 15, in which the second component comprises a polyaluminium chloride having the formula $Al_n(OH)_mCl_{mn}$, where n is in the range 1 to 20, m is less than 3n and $(3n-m)/m$ is at least 2.

18. An adhesive according to claim 15, in which the second component comprises a polyaluminium chloride having the formula $Al_x(OH)_yCl_z$ where x is from 1 to 4, preferably 1, y and z, which may be the same or different, are from 0.5 to 2.5 and the ratio y:z is in the range 5:1 to 1:5.

19. A method of laying a floorcovering using an adhesive according to any of claims 1 to 18, in which the first, adhesive component is applied to a floor and/or to the floorcovering, at least some of the adhesive is treated with the second, destabiliser component, and the floorcovering is laid.

20. A method according to claim 19, in which only adhesive occupying an edge region of the floor or floorcovering is treated with the destabiliser.

21. A two-part pack comprising a first part containing the first component of an adhesive according to any of claims 1 to 18 and a second part containing the second component thereof.

22. A method of preparing the first component of an adhesive according to any of claims 1 to 18, comprising preparing an aqueous dispersion of the resin, dispersing in the aqueous dispersion some or all of the polymer in the form of a latex, and adding water to the resulting dispersion, any remaining polymer being added in the form of a latex during or after addition of the water.

23. A method according to claim 22, when dependent on claim 11 or 12, in which a filler is dispersed in the latex.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 947 818 (SUNSTAR CHEM. IND.)<br>* Claims 1,5<br>* & US-A-4 386 992 (Cat. D), & US-A-4 479 840 (Cat. D)<br>— — — | | C 09 J 107/02<br>C 09 J 109/08<br>C 09 J 133/06<br>C 09 J 131/04<br>C 09 J 5/00 |
| A | EP-A-0 023 360 (WACKER-CHEMIE GmbH)<br>* Claim 1; page 5, lines 1,7; page 7, lines 15-24 *<br>— — — | | |
| A | US-A-4 654 388 (PER-ERIK LOFGREN)<br>* Claims 1,3,7 *<br>— — — | | |
| A | DD-A-6 213 5 (G. WANGE et al.)<br>* Claim 1 *<br>— — — | | |
| A | US-A-3 586 598 (P.H. BEEMER)<br>* Claim 14; column 3, lines 27-43 *<br>— — — — — | | |

|  |  |
|---|---|
| | **TECHNICAL FIELDS SEARCHED (Int. Cl.5)**<br><br>G 09 J |

The present search report has been drawn up for all claims

| Place of search | Date of completion of search | Examiner |
|---|---|---|
| The Hague | 29 October 90 | VAN HUMBEECK F.W.C. |